(19) Europäisches Patentamt

European Patent Office

Office européen des brevets

(11) **EP 1 548 712 A2**

(12) **EUROPEAN PATENT APPLICATION**

(43) Date of publication:
**29.06.2005 Bulletin 2005/26**

(51) Int Cl.⁷: **G11B 7/005**

(21) Application number: **04027982.0**

(22) Date of filing: **25.11.2004**

| | |
|---|---|
| (84) Designated Contracting States:<br>**AT BE BG CH CY CZ DE DK EE ES FI FR GB GR HU IE IS IT LI LU MC NL PL PT RO SE SI SK TR**<br>Designated Extension States:<br>**AL HR LT LV MK YU** | (72) Inventors:<br>• **Yanagawa, Naoharu**<br>  **4-chome Tokorozawa-shi Saitama (JP)**<br>• **Kato, Masahiro**<br>  **4-chome Tokorozawa-shi Saitama (JP)**<br>• **Yone, Tatsuhiro**<br>  **4-chome Tokorozawa-shi Saitama (JP)** |
| (30) Priority: **27.11.2003 JP 2003396778** | |
| (71) Applicant: **Pioneer Corporation**<br>**Meguro-ku, Tokyo (JP)** | (74) Representative:<br>**Reinhard - Skuhra - Weise & Partner GbR**<br>**Postfach 44 01 51**<br>**80750 München (DE)** |

(54) **Data reading device and pre-pit detection circuit**

(57)    A data reading device which reads data recorded on a data recording medium on which pre-pits are formed in advance, includes a laser light source that emits a light beam, an objective lens that converges the light beam, an actuator that drives the objective lens, a light-receiving unit having first and second light-receiving regions split in a direction of recording tracks which receive a reflected light beam, an amplitude control unit (41,42) that adjusts an amplitude of an output signal output from at least one of the first and second light-receiving regions, a computing unit (33) that computes the output signal thereby generates a push-pull signal, a pre-pit detection unit (34) that detects a pre-pit signal on basis of the push-pull signal, and an extraction unit (44) that extracts an eccentricity component of the data recording medium. Preferably, the amplitude control unit adjusts the amplitude on basis of the eccentricity component.

*FIG. 4*

**Description**

BACKGROUND OF THE INVENTION

Field of the Invention

The present invention relates to a data reading device for reading data from an optical data recording medium, such as a digital versatile disk-recordable (DVD-R) or a digital versatile disk-rewritable (DVD-RW), and to a pre-pit detection circuit and a pre-pit detection method for use with the optical data reading device.

Description of the Related Art

Groove tracks serving as recording tracks, and land tracks serving as guide tracks are formed on an optical data recording medium which can record data at high recording density, such as a DVD-R or DVD-RW. Information data are recorded on each of the groove tracks by forming a recording mark therein. Pre-pits serving as phase pits which hold pre-information are formed in the land tracks in advance.

An optical recording-and-reproducing system for use with such an optical data recording medium is configured to include an optical pickup device which effects writing and reading of data from and to the optical data recording medium by a laser unit, a pre-pit detection circuit for detecting pre-pits provided in the optical data recordingmedium, a servo controller for generating a focusing error signal, a tracking error signal, a slider drive signal, and the like, on the basis of light-receiving signals from the optical pickup device, and an information data reproducing device which binarizes a read signal obtained in the optical pickup device, and subsequently performs processing of demodulation, error correction, and various types of data decoding operations, thereby reproducing information data recorded in the optical data recording medium (see, e.g., JP-A-2003-16673).

SUMMARY OF THE INVENTION

The optical recording-and-reproducing system disclosed in JP-A-2003-16673 is constituted so as to compensate for degradation in the performance of detecting wobbling or land pre-pits caused by an error in assembly of an optical system, a change in positional relationship of the optical system caused by secular changes or temperature changes, or eccentricity of an optical data recording medium (optical disk) by controlling the amount of current passing through an actuator, thereby mechanically correcting the position of an objective lens.

The constitution of JP-A-2003-16673 is configured such that an error in assembly of an optical system, or a change in positional relationship of the optical system is compensated for by mechanically driving the objective lens. Therefore, the constitution entails a problem of mechanical driving of the objective lens practically failing to keep pace with the fluctuation, to thus fail to remove eccentricity-dependent components which fluctuate at an extremely high frequency.

An example one of the problems to be solved by the present invention is difficulty encountered in effecting mechanical driving of an objective lens to remove eccentricity-dependent components superposed on land pre-pit (hereinafter referred to simply as "LPP") components in terms of frequency, as well as in removing the eccentricity-dependent components.

According to an aspect of the present invention, a data reading device which reads data recorded on a data recording medium on which pre-pits are formed in advance, the data reading device includes a laser light source that emits a light beam, an objective lens that converges the light beam, thereby forms a light spot on the data recording medium, an actuator that drives the objective lens, a light-receiving unit having a first light-receiving region and a second light-receiving region which are split along a division line corresponding to a direction of recording tracks and which receive the light beam reflected from the data recording medium, an amplitude control unit that adjusts an amplitude of an output signal output from at least one of the first light-receiving region and the second light-receiving region, a computing unit that computes the output signal adjusted by the amplitude control unit, thereby generates a push-pull signal, a pre-pit detection unit that detects a pre-pit signal on basis of the push-pull signal, and an extraction unit that extracts an eccentricity component of the data recording medium. Preferably, the amplitude control unit adjusts the amplitude of the output signal on basis of the eccentricity component.

According to another aspect of the present invention, a pre-pit detection circuit that detects a pre-pit formed on a data recording medium, includes an amplitude control unit that adjusts an amplitude of an output signal output from at least one of a first light-receiving region and a second light-receiving region which receive a light beam reflected on the data recording medium, a computing unit that computes the output signal adjusted by the amplitude control unit, thereby generates a push-pull signal, and a pre-pit detection unit that detects a pre-pit signal on basis of the push-pull signal. Preferably, the amplitude control unit adjusts amplitudes of a first output signal and a second output signal on basis of an eccentricity component of the data recording medium.

According to yet another aspect of the present invention, a pre-pit detection method for detecting a pre-pit formed on a data recording medium, includes extracting an eccentricity component of the data recording medium, compensating for an amplitude of an output signal output from at least one of a first light receiving region and a second light receiving region on basis of the eccentricity component of the data recording medium,

subjecting the output signal whose amplitude has been compensated to logical operation, thereby generating a push-pull signal, and detecting the pre-pit on basis of the push-pull signal.

BRIEF DESCRIPTION OF THE DRAWINGS

Fig. 1 is a diagram showing one portion of a recording face of an optical disk;
Fig. 2 is a schematic diagram showing a data recording-and-reproducing apparatus;
Figs. 3A and 3B are schematic diagrams showing a pickup device;
Fig. 4 is a schematic diagram showing a first embodiment of a pre-pit signal detector according to the invention;

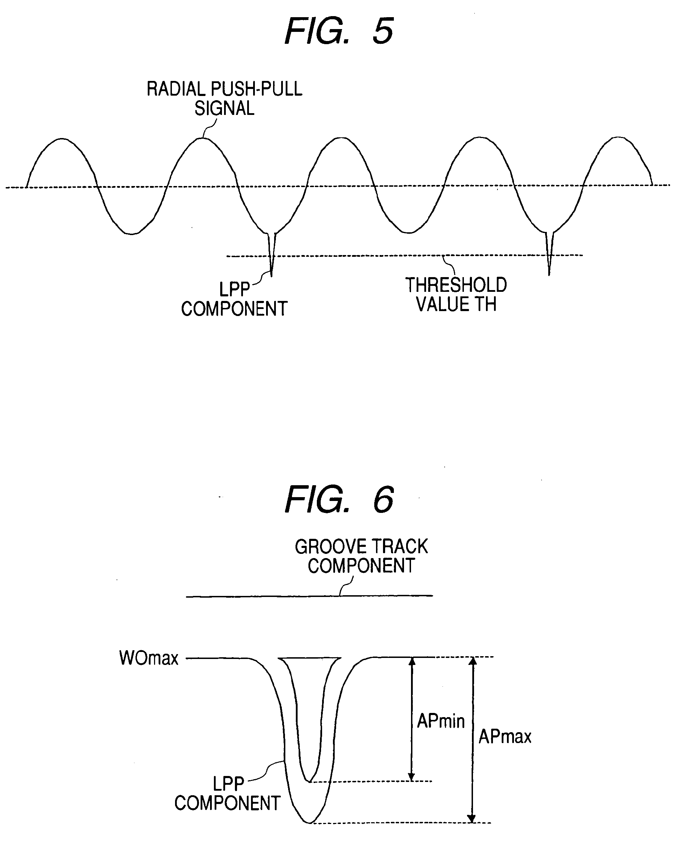

Fig. 5 is a diagram showing a waveform of a push-pull signal;
Fig. 6 is a diagram showing an AR waveform;
Fig. 7 is a diagram showing a disk eccentricity dependency of AR characteristics;
Figs. 8A and 8B show push-pull signals where the disk has small eccentricity;
Figs. 9A and 9B show push-pull signals where the disk has large eccentricity;
Fig. 10 is a diagram showing a pickup device including a lens sensor;
Fig. 11 is a schematic diagram showing a second embodiment of a pre-pit signal detector according to the invention;
Fig. 12 is a schematic diagram showing a third embodiment of a pre-pit signal detector according to the invention;
Fig. 13 is a graph showing a relationship between signals Rad and Rbc (AR detection circuit ratio (A+D) / (B+C)) and an AR value; and
Fig. 14 is a schematic diagram showing a fourth embodiment of a pre-pit signal detector according to the invention.

DETAILED DESCRIPTION OF THE INVENTION

Hereinafter, embodiments of a data reading device and a pre-pit detection circuit according to the invention will be described by reference to the drawings.

(First Embodiment)

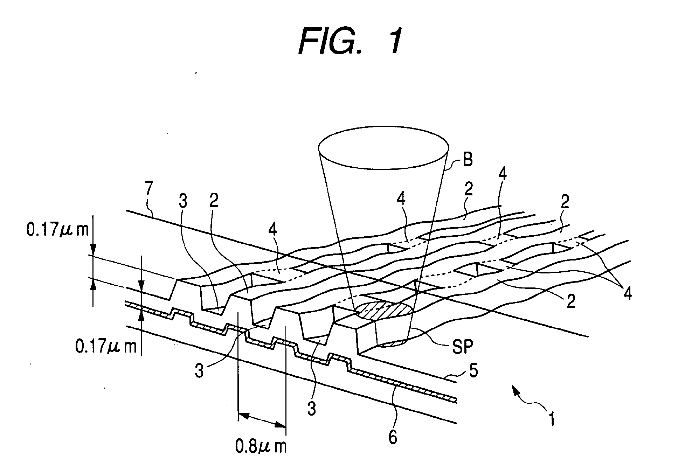

First, the data reading device according to the invention will be described by reference to Figs. 1 to 3B. In the following description, a data recording-and-reproducing apparatus which is capable of recording and reproducing data is adopted as an example of the data reading device.

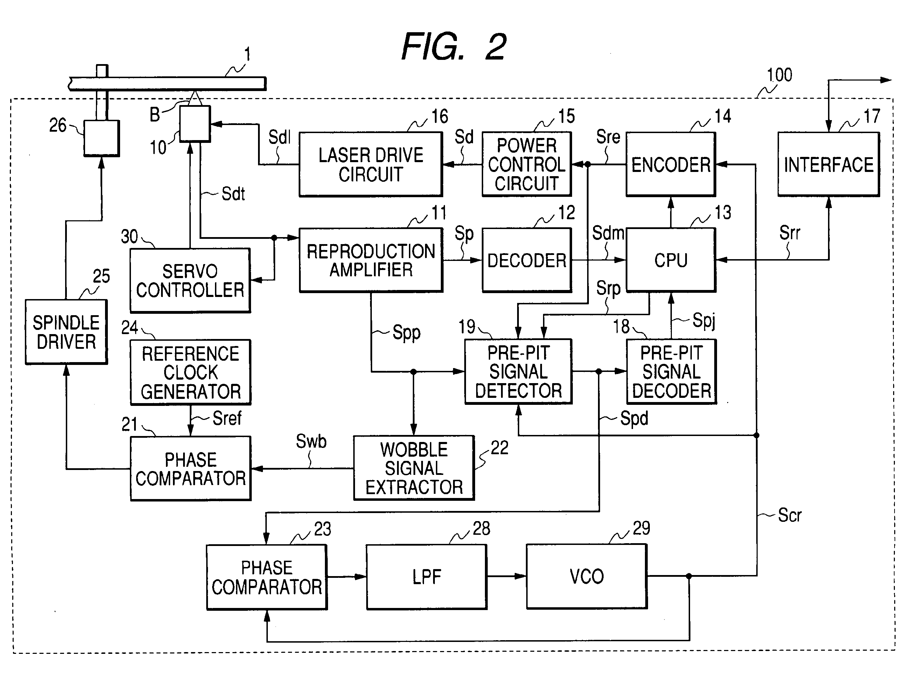

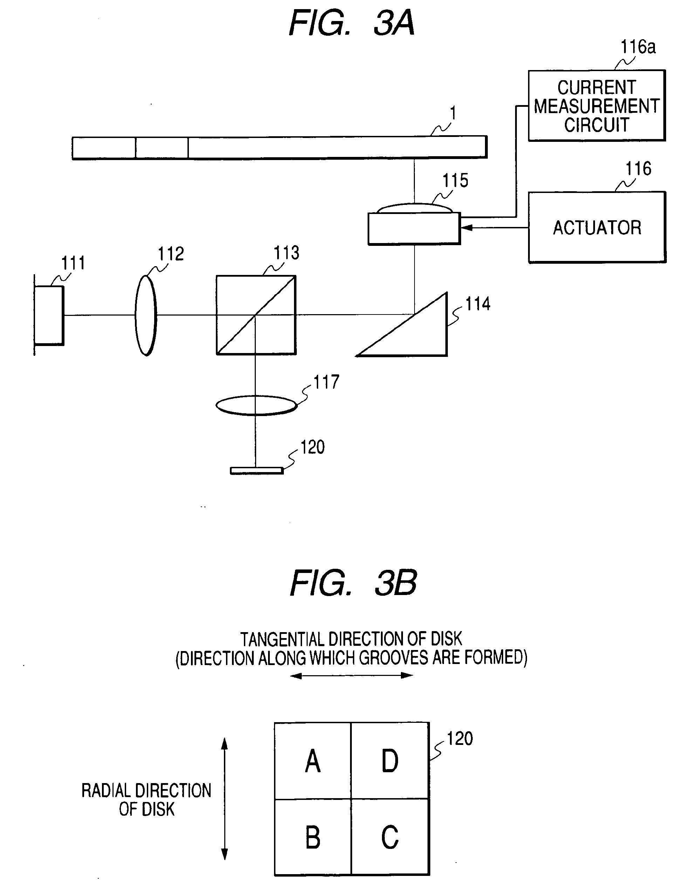

Fig. 1 is a partially enlarged diagram showing one portion of a recording face of an optical disk according to the invention. Fig. 2 is a schematic diagram showing a data recording-and-reproducing apparatus according to the invention. Figs. 3A and 3B are schematic diagrams showing a configuration of a pickup device of the data recording-and-reproducing apparatus.

The data recording-and-reproducing apparatus of the embodiment is a data reading device which detects land pre-pits accurately at the time of reading of data after the data have been recorded on a data recording medium, such as a DVD-R, or a DVD-RW, in which land pre-pits are provided in advance. In the following description, a DVD-R is adopted as an example of an optical disk serving as the data recording medium for use with the data recording-and-reproducing apparatus.

In Fig. 1, the optical disk 1 is a dye-coated type DVD-R provided with a dye layer 5 and of a write-once type. The optical disk 1 includes grooved tracks 2 serving as recording tracks, and land tracks 3 serving as guide tracks-which guide a light beam B for reproduction and recording. Furthermore, the optical disk 1 includes a protective layer 7 for protecting the groove tracks 2 and the land tracks 3, and a metal-deposited face 6 for reflecting the light beam B when reproducing recorded data.

A pre-pit 4 for holding pre-information is formed in the land track 3 on the optical disk 1 in advance of shipment. The groove track 2 is wobbled at a frequency corresponding to a rated rotational velocity of the optical disk 1. Record control information on the basis of wobbling of the groove track 2 is recorded in advance of shipment of the optical disk 1, as is the case of the pre-pit 4.

When recording information other than the above-mentioned pre-information is to be recorded on the optical disk 1, the pre-information is obtained by sampling a wobbling frequency of the groove track 2 and detecting the pre-pits 4 so as to control rotation of the optical disk to a predetermined rotational velocity. On the basis of the thus-obtained pre-information, the optimum output for the light beam B, or the like, is set, address information on the optical disk 1, or the like, is obtained, and recording information is recorded at a record position corresponding to the address information.

Here, when the recording information is to be recorded, a pit is formed by radiation of the light beam B, and the recording information is recorded while being controlled in such a manner that the center of the pit coincides with the center of the groove track 2. At this time, a light spot SP is set to such a size that not only is the light beam B emitted on the groove track 2, but also a portion of the light beam B is emitted on the land track 3, as shown in Fig. 1.

Here, by a radial push-pull method making use of a part of reflected light from the light spot SP emitted to the land track 3, the pre-pits 4 are detected, whereby pre-information corresponding thereto is obtained. The "radial push-pull method" means a push-pull method making use of a light-receiving element split along a line parallel to the direction in which the light beam travels over the optical disk 1. A wobble signal is detected as pre-information from the groove track 2 with use of the reflected light of the light spot SP which has been emitted onto the groove track 2, whereby a clock signal for rotation control is obtained.

Next, a general configuration and operations of the data recording-and-reproducing apparatus which incorporates a pre-pit detector of the embodiment will be described by reference to Figs. 2 to 3B.

Fig. 2 is a block diagram showing a general configuration of the data recording-and-reproducing apparatus. Figs. 3A and 3B are diagrams showing a configuration of a pickup device of the data recording-and-reproducing apparatus.

As shown in Fig. 2, the data recording-and-reproducing apparatus 100 is configured from a pickup device 10, a reproduction amplifier 11, a decoder 12, a CPU 13, an encoder 14, a power control circuit 15, a laser drive circuit 16, a pre-pit signal decoder 18, a pre-pit signal detector 19, phase comparators 21 and 23, a wobble signal extractor 22, a reference clock generator 24, a spindle driver 25, a spindle motor 26, a low pass filter (LPF) 28, a voltage controlled oscillator (VCO) 29, and a servo controller 30. The pre-pit signal detector 19 corresponds to the pre-pit detection circuit according to the invention. Digital data Srr to be recorded are input into the thus-configured data recording-and-reproducing apparatus 100 from an external host computer via an interface 17.

The pickup device 10 emits a laser beam onto a data recording surface of the optical disk 1, which is the target of the data recording and reproduction, on the basis of a laser drive signal Sd1, thereby effecting datawriting onto the optical disk 1 and data reading from the optical disk 1. The pickup device 10 detects a signal corresponding to the pre-pit 4 and the groove track 2 by use of the reflected light of the light beam B according to the radial push-pull method. When recording, the pickup device 10 records the digital data Srr to be recorded, and detects digital data-which have been already recorded-through use of the reflected light of the light beam B.

More specifically, as shown in Fig. 3A, the pickup device 10 is configured from a semiconductor laser 111, a collimator lens 112, a beam splitter 113, a deflecting prism 114, an objective lens 115, an actuator 116, a detection lens 117, and a quadrant photodetector 120.

The semiconductor laser 111 emits the light beam B under a state where the optical disk 1 is rotatably driven by the spindle motor 26. The light beam B emitted from the semiconductor laser 111 is converted into parallel light through the collimator lens 112, and enters the beam splitter 113. The light beam B which has passed through the beam splitter 113 is deflected through the deflection prism 114, and enters the objective lens 115. Thereafter, the light beam B is condensed on the recording surface of the optical disk 1 by the objective lens 115, thereby forming a light spot (see Fig. 1). The light beam B reflected on the optical disk 1 is returned to parallel light by the objective lens 115, is deflected through the deflection prism 114, and thereafter enters the beam splitter 113. The light beam B is changed by 90° in its orientation by the beam splitter 113, subsequently propagates through the detection lens 117, and is received by the quadrant photodetector 120.

The quadrant photodetector 120 is a photo detector of a rectangular shape which outputs an electric signal commensurate with intensity of a received signal. The quadrant photodetector 120 is divided into four equal light-receiving regions A, B, C, and D which respectively correspond to regions of the optical disk 1 along the radial direction and the tangential direction (the direction along which the grooves are formed). More specifically, the quadrant photodetector 120 is divided in half by a first division line provided along the tangential direction of the outer periphery of the optical disk 1, that is, a division line corresponding to the direction of the tracks, into two groups of light receiving regions A, D and light receiving regions B, C, and further divided in half by a second division line corresponding to the radial direction of the optical disk 1 into two groups of light receiving regions A, B and light receiving regions C, D, to thereby divided into four regions. A light beam received by the receiving regions A, B, C, and D of the quadrant photodetector 120 is converted into light-receiving signals Ra, Rb, Rc, and Rd commensurate with the amount of the received light. The light-receiving signals Ra, Rb, Rc, and Rd are transmitted to the reproduction amplifier 11 as a pickup detection signal Sdt.

The reproduction amplifier 11 amplifies the pickup signal detection signal Sdt output from the pickup device 10, and outputs a pre-information signal Spp corresponding to the pre-pit 4 and the wobble signal of the groove track 2, and outputs an amplification signal Sp corresponding to the digital data which have been already been recorded.

The decoder 12 performs 8-16 demodulation and de-interleave processing on the amplification signal Sp, thereby decoding the amplification signal Sp, and outputs a demodulated signal Sdm to the CPU 13.

The pre-pit signal detector 19 outputs, to the pre-pit signal decoder 18 and the phase comparator 23, a pulse signal serving as a pit detection signal Spd on the basis of the pre-information signal Spp. The pre-pit signal detector 19 constitutes a principal portion of the invention, and the details thereof will be described later.

The phase comparator 23, the LPF 28, and the VCO 29 integrally constitute a PLL circuit. The PLL circuit outputs to the encoder 14 and the pre-pit signal detector 19 a recording clock signal Scr which is synchronized with a phase of the pre-pit detection signal Spd, which has been input to the PLL circuit.

The wobble signal extractor 22 includes a band-pass filter (BPF) which extracts a wobble signal component from the pre-information signal Spp, and a comparator which compares the thus-extracted wobble signal component with a predetermined reference value. The wobble signal extractor 22 outputs a pulse signal only during a period when the amplification level of the wobble signal component exceeds the reference value. More specifically, the wobble signal extractor 22 slices the wobble signal component in a pulse train form, thereby outputting the signal as an extracted wobble signal Swb to the comparator 21.

The phase comparator 21 compares a phase of the thus-input extracted wobble signal Swb and that of a reference clock signal Sref which includes a reference frequency component of the rotational velocity of the optical disk 1 supplied from the reference clock generator 24, thereby obtaining a difference signal. The phase comparator 21 supplies the thus-obtained difference signal to the spindle motor 26 via the spindle driver 25 as a rotation control signal. As a result, spindle servo control is exercised against the spindle motor 26, whereby the optical disk 1 rotates at a rotational velocity determined on the basis of a frequency and a phase of the reference clock signal Sref.

Under control by the CPU 13, the interface 17 performs interface processing on the digital data Srr-which has been transmitted from the host computer-so that the digital data Srr are acquired by the data recording-and-reproducing apparatus 100, and outputs the thus-processed digital data Srr to the encoder 14 via the CPU 13.

The encoder 14 performs an unillustrated ECC generation processing, 8-16 modulation, and scrambling on the digital data Srr with use of the recording clock signal Scr from the VCO 29, thereby generating a modulating signal Sre, and outputs the modulating signal Sre to the power control circuit 15 and the pre-pit signal detector 19.

The power control circuit 15 performs write strategy processing on the modulating signal Sre on the basis of the recording clock signal Scr so that recording pits are formed in a good shape on the optical disk 1, and outputs a record signal Sd for use with driving the laser diode (unillustrated) in the pickup device 10. The laser drive circuit 16 outputs a laser drive signal Sd1, on the basis of the record signal Sd, for actually driving the laser diode and radiating the light beam B.

On the basis of a pre-information decoded signal Spj output from the pre-pit signal decoder 18 on the basis of the pre-pit detection signal Spd, the CPU 13 acquires pre-information, and controls recording operation for recording the digital data Srr onto the optical disk 1 at a position corresponding to the address information contained in the thus-acquired pre-information. Furthermore, on the basis of the demodulated signals Sdm, the CPU 13 outputs a reproduction signal corresponding to the previously-recorded digital data by way of the interface 17 to the outside, and controls the data recording-and-reproducing apparatus 100 in its entirety. Furthermore, the CPU 13 generates a status signal Srp which indicateswhetherthedatarecording-and-reproducingapparatus 100 is under a recording status or reproducing status, and outputs the status signal Srp to the pre-pit signal detector 19.

The servo controller 30 is a circuit which generates the focusing error signal and the tracking error signal respectively on the basis of the pickup detection signal Sdt, that is, the light-receiving signals Ra, Rb, Rc, and Rd. The focusing error signal is a signal which drives the objective lens 115 for correcting a focal point of the light beam B, thereby correcting a relative distance between the objective lens 115 and the optical disk 1. The tracking error signal is a signal which drives the objective lens 15 for adjusting in the radial direction of the disk a position where the data reading spot of the light beam B is formed. The focusing error signal and the tracking error signal are respectively supplied to the actuator 116. The actuator 116 drives the objective lens 115 on the basis of the focusing error signal and the tracking error signal.

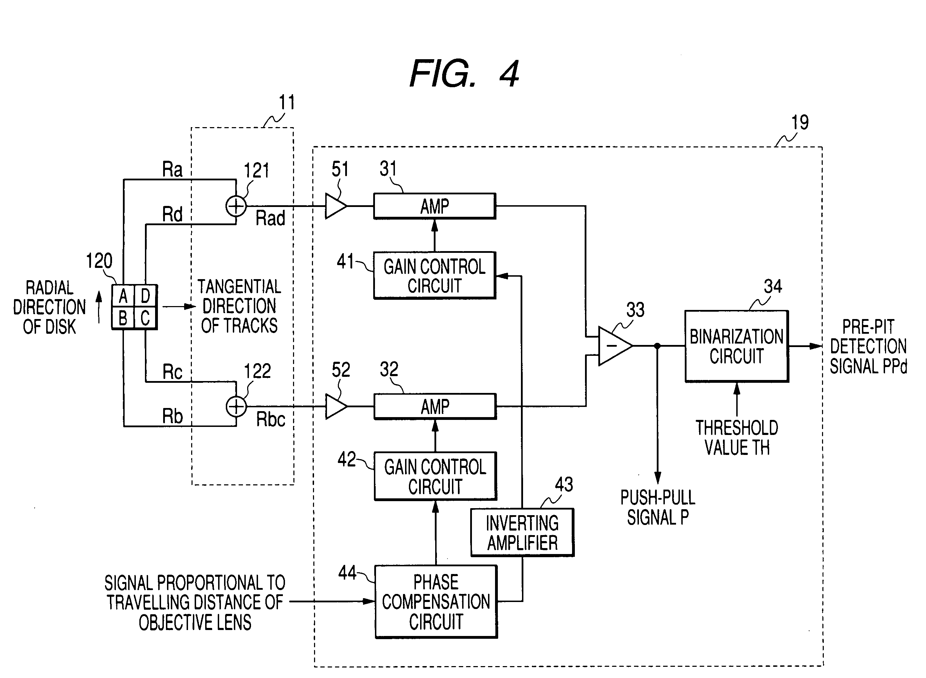

Next, the pre-pit signal detector 19 of the embodiment will be described by reference to Fig. 4.

Fig. 4 is a block diagram of the pre-pit detection circuit for use with the data recording-and-reproducing apparatus of the embodiment.

The pre-pit signal detector 19 is a pre-pit detection circuit for detecting the pre-pit detection signal Spd. The pre-pit detection signal Spd is a signal component corresponding to the pre-pit 4 formed on the optical disk 1 in advance on the basis of the light-receiving signals Ra, Rb, Rc, and Rd which have been generated by the quadrant light-receiving element 120.

The pre-pit signal detector 19 is disposed subsequent to adders 121, 122 provided in the reproduction amplifier 11, as shown in Fig. 4. The pre-pit signal detector 19 includes buffer amplifiers 51, 52 for effecting impedance matching, a gain control circuit 41 for adjusting gain of the amplifier 31, a gain control circuit 42 for adjusting gain of the amplifier 32, a subtracter 33 for subtracting an output signal of the amplifier 32 from an output signal from the amplifier 32, thereby outputting the result as a push-pull signal P, and a binarization circuit 34 for binarizing the push-pull signal P at a threshold value TH, thereby outputting the result from the subtracter 33.

The pre-information signal Spp is input into the pre-pit signal detector 19 from the reproduction amplifier 11. The reproduction amplifier 11 adds the light-receiving signals Ra and Rd obtained in the light-receiving regions A and D of the quadrant light-receiving element 120, and generates an addition signal Rad by the adder 121 in the reproduction amplifier 11, adds the light-receiving signals Rb and Rc obtained in the light-receiving regions B and C of the quadrant light receiving element 120, and generates an addition signal Rbc by the adder 122 in the reproduction amplifier 11, and the addition signals Rad and Rbc are transmitted to the pre-pit signal detector 19 as the pre-information signal Spp.

In the pre-pit signal detector 19, the addition signal Rad within the pre-information signal Spp is subjected to impedance matching by the buffer amplifier 51, and thereafter transmitted to the amplifier 31. The addition signal Rbc within the pre-information signal Spp is subjected to impedance matching by the buffer amplifier 52, and thereafter transmitted to the amplifier 32. A gain value adjusted by the gain control circuit 41 is input to the amplifier 31, and a gain of the addition signal Rad is adjusted in accordance with the thus-input gain value. In a similar manner, a gain value adjusted by the gain control circuit 42 is input to the amplifier 32, and a gain of the addition signal Rbc is adjusted in accordance with the thus-input gain value. The gain adjustment will be described in greater detail later.

The addition signals Rad and Rbc respectively adjusted with use of predetermined gain values are subjected to subtraction by the subtracter 33, whereby the push-pull signal P is generated. Here, the thus-generated push-pull signal P is of a waveform in which a pulse component is superposed on a substantially sinusoidal waveform. In the push-pull signal P, the substantially sinusoidal waveform is the signal component which corresponds to a shape of the groove, and the pulse component protruding from the sinusoidal is the LPP component which corresponds to the pre-pit 4. The binarization circuit 34 slices out the LPP component at the threshold value TH which has been controlled so as to detect the LPP component of the push-pull component P, thereby generating a pre-pit detection signal PPd.

Meanwhile, with regard to detection of the LPP component, criteria which must be satisfied by the optical disk 1 include an aperture ratio (hereinafter, referred to as "AR"). The AR is defined from the maximum peak value APmax and the minimum peak value APmin in the maximum value WOmax of a groove track component in the push-pull signal P, as follows:

$$AR(\%) = APmin\ /\ APmax \times 100 \qquad (1)$$

With regard to detection of LPP, a large AR value means that the range where binarization is available is wide, and that accuracy in pre-pit detection is increased. The AR value is required to be greater than 15% after recording into the information tracks of the optical disk 1, however, generally, noise components, or the like, are easily embedded after recording of data in the information tracks, thereby reducing the AR value.

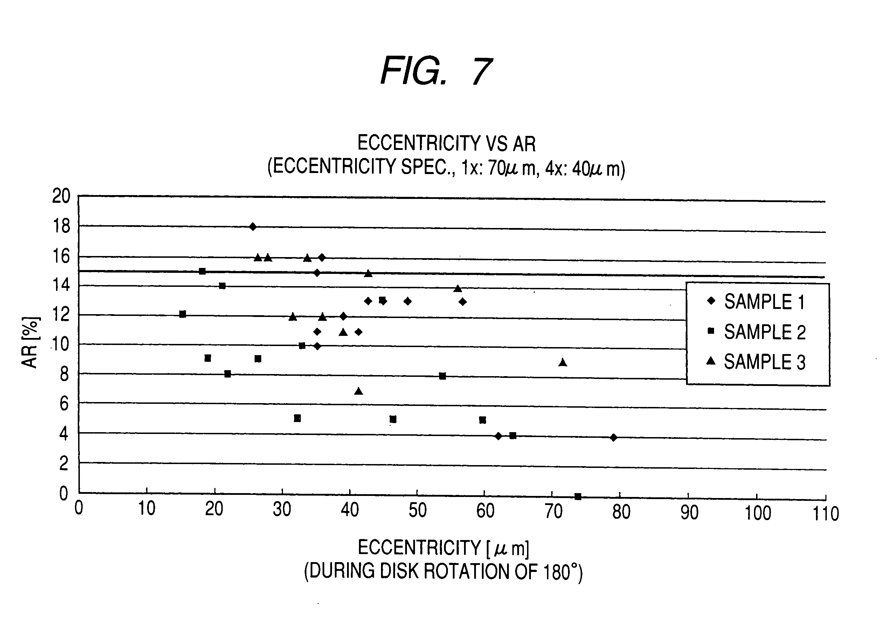

Fig. 7 is a graph showing disk-eccentricity-dependency of the AR characteristics, in which eccentricity of the optical disk 1 and AR characteristics, which are post-recording LPP characteristics, are shown. Fig. 7 shows that the smaller the disk eccentricity, the better the AR characteristics tend to be, and when the disk eccentricity is increased, the AR characteristics lower. The reason why the AR characteristics decrease with increase in the eccentricity of the disk is assumed to be as follows. When the optical disk 1 has some eccentricity, the objective lens 115 is deviated laterally to the direction of the tracks, in accordance with the eccentricity, and the motion of the objective lens 115 is directly reflected in a shift in intensity distribution of the addition signals Rad, Rbc on the quadrant photodetector 20.

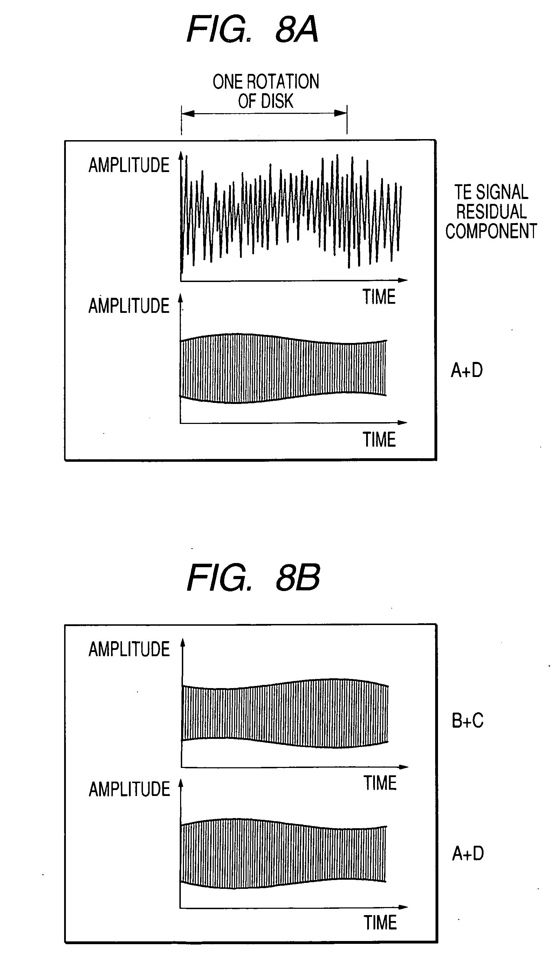

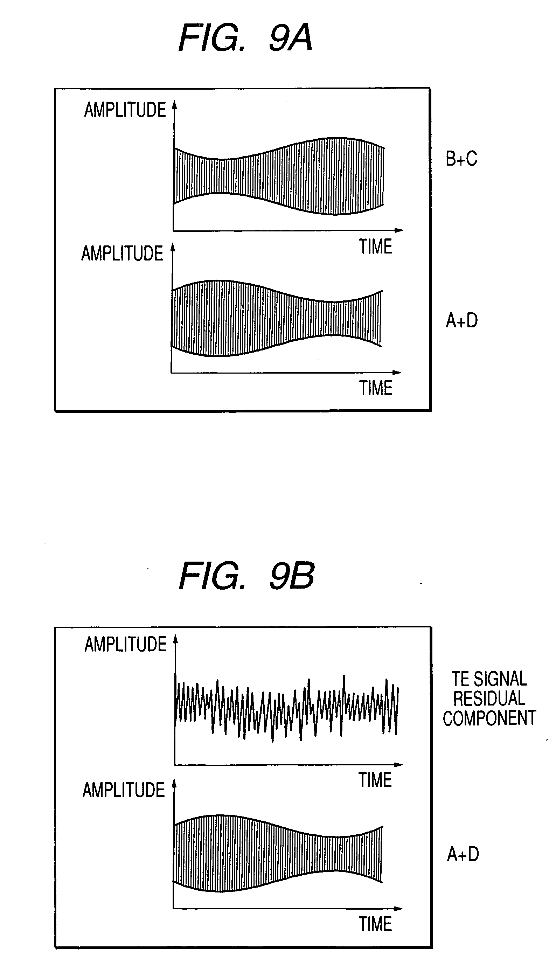

Figs. 8A to 9B show the above-mentioned shifts in intensity distribution along with actual electric signals. Figs. 8A and 8B show cases where the eccentricity of the disk is small. Figs. 9A and 9B show cases where the eccentricity of the disk is large. The drawings show that push-pull components (A+D) (that is, the addition signal Rad) and the push-pull components (B+C) (that is, the addition signal Rbc) vary corresponding to a tracking error (hereinafter referred to as "TE") signal residual component (eccentricity information), and the greater the eccentricity of the disk, the greater the changes in amplitude of the push-pull components (A+D) and (B+C).

Furthermore, since the total quantity of light entering the quadrant photodetector 120 is constant, the change in amplitude of the push-pull components (A+D) varies inversely withthatofthepush-pull components (B+C). More specifically, when the amplitude of (A+D) increases, that of (B+C) decreases, and when the amplitude of (A+D) decreases, that of (B+C) increases. As a result, an amplitude of the push-pull signal P in its entirety, which is a difference between the addition signals Rad and Rbc increases, whereby the AR value tends to fall easily.

According to the embodiment, the amplifiers 31 and 32 adjust amplitudes of the addition signals Rad and Rbc so as to render the difference between the addition signals Rad and Rbc uniform.

More specifically, a signal dependent on the eccentricity component, that is, a signal which is proportional to the deviation of the objective lens 115-which is disposed in the pickup device 10 (hereinafter referred to as "disk-eccentricity-dependent component signal")-is input to the pre-pit signal detector 19 via an unillustrated signal line. By controlling the amplitudes of the addition signals Rad, Rbc corresponding to the magnitude of the disk-eccentricity-dependent component signal, the difference between the addition signals Rad and Rbc is decreased.

Here, the disk-eccentricity-dependent component signal is, for instance, a tracking error residual component or an actuator drive current, or the like. The tracking error residual component is obtained by extracting, by a band-pass filter, only a frequency component which depends on the eccentricity component, from the tracking error signal generated by the servo controller 30. The actuator drive current is a current supplied to the actuator 116 in accordance with the tracking error signal. In the embodiment, for instance, as shown in Fig. 3A, a current measurement circuit 116a is provided for measurement of the actuator drive current supplied to the actuator 116. The actuator drive current measured by the current measurement circuit 116a is output to a phase compensation circuit 44 as a disk-eccentricity-dependent component signal.

More specifically, the disk-eccentricity-dependent component signal input to the pre-pit signal detector 19 is subjected to phase compensation by the phase compensation circuit 44, and supplied to the gain control circuits 41 and 42. Here, an inverting amplifier 43 for reversing the sign (positive or negative) of an input value is disposed between the gain control circuit 41 and the phase compensation circuit 44. The gain control circuits 41, 42 respectively supply, to the amplifiers 31, 32, predetermined gain values corresponding to signs and magnitudes of the disk-eccentricity-dependent component signals, which have been respectively input to the circuits 41, 42. The amplifiers 31, 32 adjust the gains of the addition signals Rad, Rbc in accordance with the gain values and control so that the difference in amplitude between the addition signals Rad and Rbc is decreased.

As described above, in the pre-pit signal detector 19 of the embodiment, the addition signals Rad, Rbc obtained from the quadrant photodetector 20 are amplified on the basis of the deviation of the objective lens with use of the respective gain values by the amplifiers 31, 32, thereby being controlled so that the difference in amplitude between the addition signals Rad and Rbc is decreased. As a result, the pre-pit signal detector 19 compensates for noise of the push-pull signal P caused by eccentricity of the optical disk 1, and prevents degradation of the push-pull signal P caused by the same. Therefore, even when the optical disk 1 has some eccentricity, AR characteristics are improved by preventing degradation of the push-pull signal P along with the eccentricity-dependent-component which depends on the deviation amount of the objective lens. As described above, the embodiment provides a pre-pit detection circuit and a data reading device which enables, even when the disk has large eccentricity, acquisition of a good push-pull signal P-as if it were obtained from a disk whose eccentricity is close to zero-merely by addition of a simple circuit configuration, whereby, even during data reading after data recording, pre-pits can be detected accurately.

As described above, the data recording-and-reproducing apparatus 100, which is a data reading device of the embodiment, is an apparatus which reads information recorded on an optical disk 1 serving as a data recording medium on which pre-pits have been formed in advance. The data recording-and-reproducing apparatus 100 has the semiconductor laser 111 serving as a laser light source for radiating a light beam, the objective lens 115 for converting the light beam, thereby forming a light spot on the data recording medium, the actuator 116 for driving the objective lens 115, and the quadrant light-receiving element 120 which is a light-receiving unit having first light-receiving regions A, D and second light-receiving regions B, C which have been respectively divided by division lines corresponding to the direction of the tracks of the optical disk 1, and which receive light beam reflected on the optical disk 1.

Furthermore, the data recording-and-reproducing apparatus 100 has the amplifier 31 serving as a first amplitude control unit, the amplifier 32 serving as a second amplitude control unit, the subtracter 33 serving as a computing unit, the binarization circuit 34 serving as apre-pit detection unit, and an extraction unit. The amplifier 31 controls the amplitude of the addition signal Rad, which is a first output signal output from the first light-receiving regions A, D. The amplifier 32 controls the amplitude of the addition signal Rbc, which is a second output signal output from the second light-receiving regions B, C. The subtracter 33 performs subtraction of the addition signal Rad controlled by the amplifier 131 and the addition signal Rbc controlled by the amplifier 32, thereby generating the push-pull signal P. The binarization circuit 34 detects the pre-pit signal PPd on the basis of the push-pull signal P. The extraction unit (e.g., the servo controller 30) extracts an eccentricity component of the optical disk 1. In the data recording-and-reproducing apparatus 100, the amplifiers 31 and 32 adjust amplitudes of the addition signals Rad, Rbc on the basis of the eccentricity component of the optical disk 1.

Therefore, the embodiment enables control of the difference between the addition signals Rad and Rbc so as to be decreased by adjusting the amplitudes of the addition signals Rad, Rbc on the basis of the eccentricity component of the optical disk 1. Accordingly, even when the optical disk 1 has some eccentricity, the push-pull signal P is prevented from degrading in accordance with the eccentricity-dependent component depending on the deviation of the objective lens, whereby the AR characteristics are improved. As described above, the embodiment provides a pre-pit detection circuit and a data reading device which enable, even when the disk has large eccentricity, acquisition of a good push-pull signal P-as if it were obtained from a disk whose eccentricity is close to zero-merely by addition of a simple circuit configuration, whereby, even during data reading after data recording, pre-pits can be detected accurately.

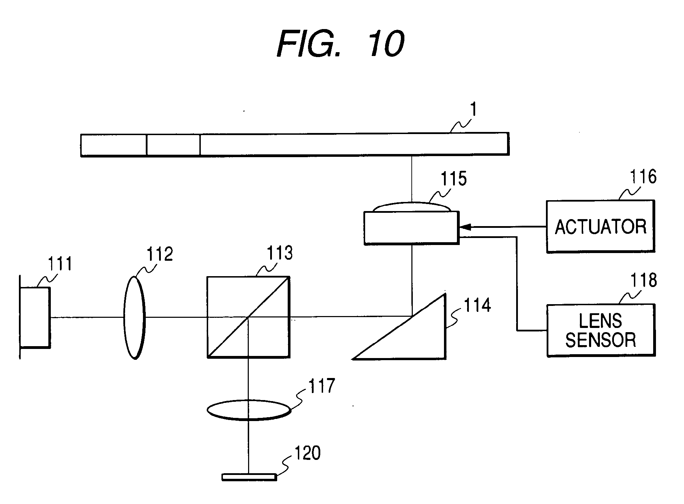

In the embodiment, the tracking error residual component and actuator drive current are employed as a signal to be input into the phase compensation circuit 44 serving as a signal proportional to the deviation of the objective lens, however, the embodiment is not limited thereto. For instance, as shown in Fig. 10, the embodiment may adopt a lens sensor 118 which directly detects the deviation of the objective lens, and use a detection output from the lens sensor 118 as a signal proportional to the deviation amount of the objective lens 115.

(Second Embodiment)

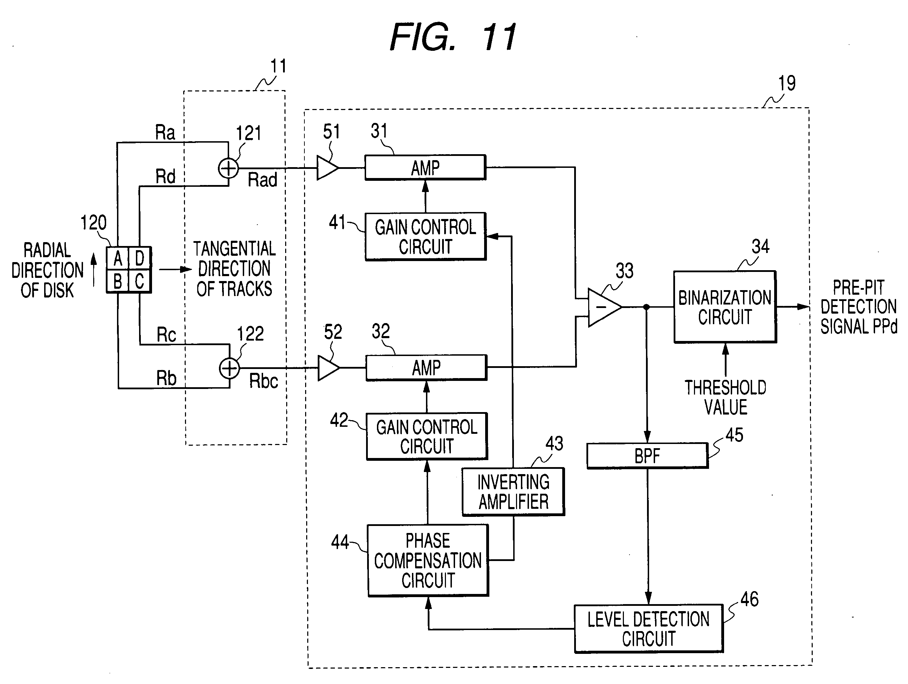

Fig. 11 is a schematic diagram showing a second embodiment of the pre-pit signal detector 19 according to the invention.

The pre-pit signal detector 19 of the embodiment is obtained by replacing the pre-pit detector 19 of an open-loop servo type shown in Fig. 4 with that of a closed-servo loop type. In the following, repeated descriptions of elements identical with those of the first embodiment are omitted.

The pre-pit signal detector 19 of the embodiment includes a band-pass filter 45 connected subsequent to the subtracter 33, and a level detection circuit 46 connected subsequent to the band-pass filter 45.

The band-pass filter 45 allows to pass only signals which depend on eccentricity of the disk (e.g., signals ranging from 0 to 100 Hz) among the push-pull signals P output from the subtracter 33. In other words, the band-pass filter 45 generates the disk-eccentricity-dependent component signal corresponding to the amount of eccentricity of the disk 1 on the basis of the push-pull signal P.

The level detection circuit 46 detects a level of the disk-eccentricity-dependent component signal output from the band-pass filter 45, and outputs the level value of the thus-detected disk-eccentricity-dependent component signal to the phase compensation circuit 44.

In other words, the embodiment is configured as follows: a signal proportional to the deviation of the objective lens is not input from the outside into the phase compensation circuit 44, but only an eccentricity component is extracted from the push-pull signal P, whereby the disk-eccentricity-dependent component signal, which is proportional to the deviation of the objective lens, is fed back.

The phase compensation circuit 44 performs phase compensation processing on the level value of the disk-eccentricity-dependent component signal supplied from the level detection circuit 46, and thereafter supplies the level value of the disk-eccentricity-dependent component signal to the gain control circuit 42 and the inverting amplifier 43. The gain control circuit 42 determines a gain value corresponding to the level value, and supplies the thus-determined gain value to the amplifier 32. The inverting amplifier 43 reverses the sign (positive and negative) of the thus-supplied level value, and supplies the resultant signal to the amplifier 33. The amplifier 33 determines a gain value corresponding to the thus-supplied level value, and supplies the gain value to the amplifier 31.

Also according to the embodiment, a good push-pull signal P-as if it were obtained from a disk whose eccentricity is close to zero-can be obtained even when the disk has large amount of eccentricity, this is achieved by changing gains in accordance with magnitude of the disk-eccentricity-dependent component signal which changes in accordance with the amount of the disk eccentricity.

As described above, the pre-pit signal detector 19 of the embodiment performs feedback control upon extraction of only an eccentricity component (DC to 100 Hz). Therefore, a good push-pull signal P-as if it were obtained from a disk whose eccentricity is close to zero-can be obtained, even with a disk having large eccentricity.

Meanwhile, the embodiment may be configured such that the cut-off frequency of the band-pass filter (BPF) is changed in accordance with the rotational velocity of the disk.

(Third Embodiment)

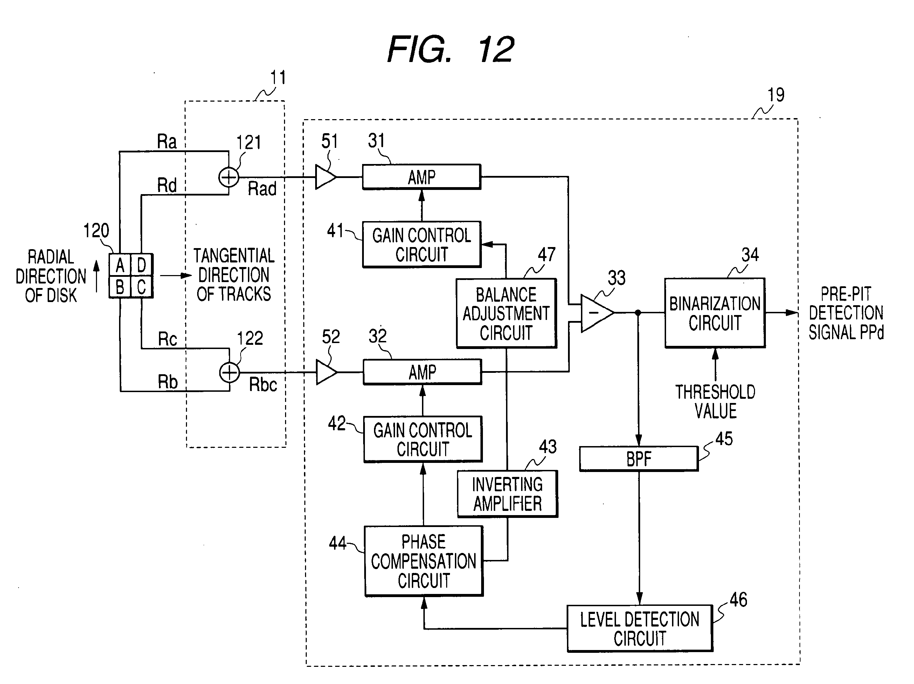

Fig. 12 is a schematic diagram showing a third embodiment of the pre-pit signal detector 19 according to the invention. The pre-pit signal detector 19 of the embodiment is substantially identical in configuration with that of the second embodiment shown in Fig. 11, however, it differs in that an output signal from the inverting amplifier 43 is supplied to the gain control circuit 41 via a balance adjustment circuit 47, which is abalance adjustment unit. In the following, repeated descriptions of elements identical with those of the first and second embodiments are omitted.

The balance adjustment circuit 47 is a circuit which adjusts the level value supplied to the gain control circuit 41 so as to obtain the best AR characteristics. Generally, on an assumption that absolute values of gains supplied to the amplifiers 31 and 32 are identical, AR is expected to be improved when the amplitude ratio between the addition signals Rad and Rbc, that is, a gain balance between the amplifiers 31 and 32, is close to zero. However, in actual, as shown in Fig. 11, there are cases where AR is improved when the ratio of the output signal Rad from the adder 121 and the output signal Rc from the adder 122 deviates from 1. In the example shown in Fig. 11, the AR value reaches the maximum value when $(A+D)/(B+C) = 1.05$, this indicates that the AR characteristics, which are the post-recording LPP characteristics, are better when the balance between (A+D) and (B+C) is approximately 1 : 1.05, rather than 1 : 1.

The balance adjustment circuit 47 increases or decreases the level value supplied from the inverting amplifier 43 so as to maintain the gain balance of the gain values supplied to the amplifiers 31 and 32, thereby maintaining the amplitude ratio between the addition signals Rad and Rbc at a predetermined value.

The pre-pi t signal detector 19 of the embodiment enables optimization of the AR value by adjustment of gain balance between the amplifier 31 and 32 so that the AR characteristics become the maximum, thereby widening a range where binarization is applicable and increasing accuracy in detection of a pre-pit.

(Fourth Embodiment)

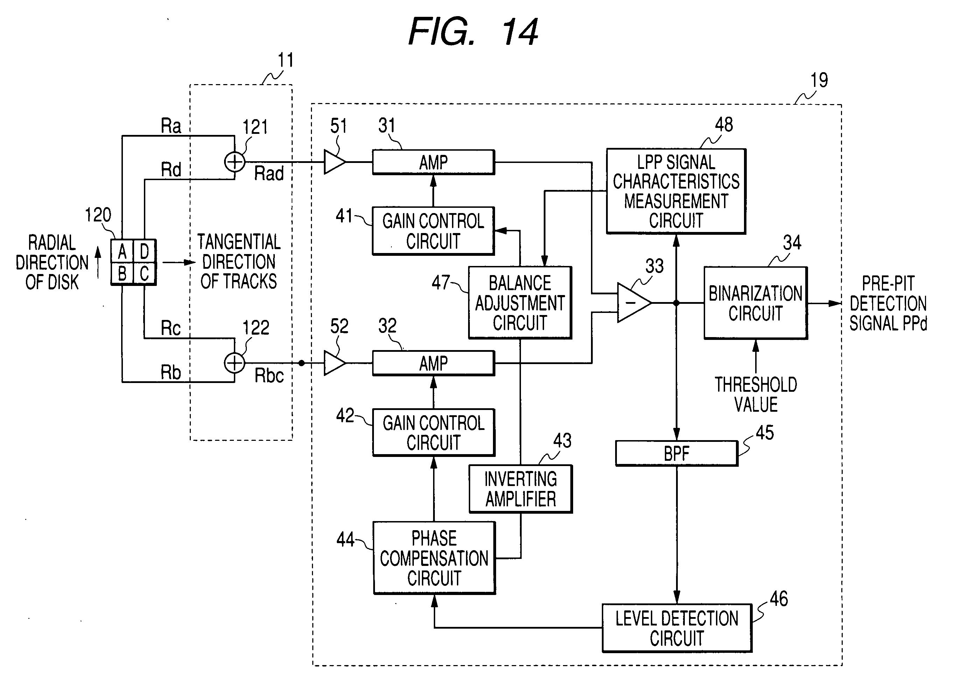

Fig. 14 is a schematic diagram showing a fourth embodiment of the pre-pit signal detector 19 according to the invention.

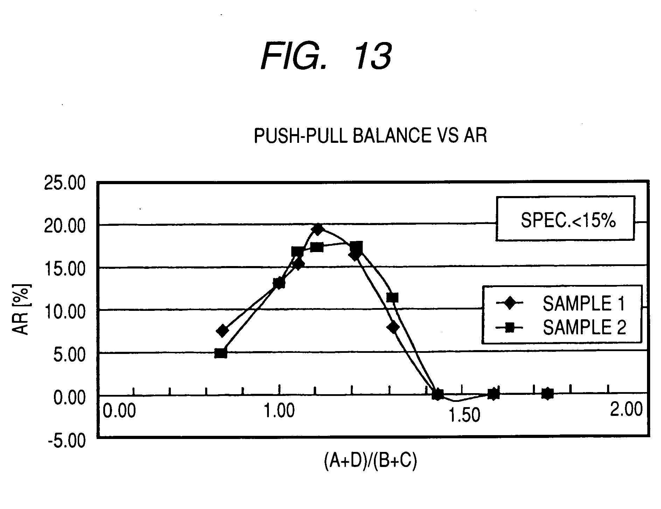

The pre-pit signal detector 19 of the embodiment is substantially identical in configuration with that of the third embodiment shown in Fig. 13, however, it differs in that characteristics of the push-pull signal P are measured by a push-pull signal characteristics measurement circuit 48, and the balance adjustment circuit 47 is controlled so as to cancel the noise component of the push-pull signal P.

Meanwhile, the characteristics measured by the push-pull signal characteristics measurement circuit 48 include the AR characteristics, an error ratio of the push-pull signal P (a ratio of the number of the actually-detected push-pull signals P to the number of push-pull signals expected to be detected), and the like.

That is, the pre-pit signal detector 19 of the embodiment is configured such that the push-pull signal characteristics measurement circuit 48 measures the AR characteristics and the error ratio of the push-pull signal P on the basis of the push-pull signal P, and the gain balance of the adders 31, 32 is adjusted so as to optimize the gain balance between the amplifiers 31, 32, thereby maximizing the AR characteristics in accordance with the AR characteristics, the error ratio, and the like.

As described above, according to the embodiment, the gain balance between the amplifiers 31, 32 is fed back so as to optimize the gain balance. Accordingly, the AR characteristics, which are the characteristics of the post-recording LPP, can be increased, and the eccentricity of the disk can be made equal to zero under any circumstances, thereby bringing the gain balance into a state where the best AR characteristics are achieved.

**Claims**

1. A data reading device which reads data recorded on a data recording medium on which pre-pits are formed in advance, the data reading device comprising:

   a laser light source that emits a light beam;
   an objective lens that converges the light beam, thereby forms a light spot on the data recording medium;
   an actuator that drives the objective lens;
   a light-receiving unit having a first light-receiving region and a second light-receiving region which are split along a division line corresponding to a direction of recording tracks and which receive the light beam reflected from the data recording medium;

   an amplitude control unit that adjusts an amplitude of an output signal output from at least one of the first light-receiving region and the second light-receiving region;
   a computing unit that computes the output signal adjusted by the amplitude control unit, thereby generates a push-pull signal;
   a pre-pit detection unit that detects a pre-pit signal on basis of the push-pull signal; and
   an extraction unit that extracts an eccentricity component of the data recording medium, wherein
   the amplitude control unit adjusts the amplitude of the output signal on basis of the eccentricity component.

2. The data reading device according to claim 1, wherein the extraction unit extracts a signal proportional to a deviation amount of the objective lens.

3. The data reading device according to claim 2, wherein the extraction unit is a lens sensor that detects deviation of the objective lens.

4. The data reading device according to claim 2, wherein the extraction unit is a current measurement unit which measures drive current of the actuator.

5. The data reading device according to claim 2, wherein the extraction unit extracts the eccentricity component of the data recording medium from the push-pull signal.

6. The data reading device according to claim 5, wherein the extraction unit includes a frequency filter that extracts the eccentricity component of the data recording medium.

7. A pre-pit detection circuit that detects a pre-pit formed on a data recording medium, comprising:

   an amplitude control unit that adjusts an amplitude of an output signal output from at least one of a first light-receiving region and a second light-receiving region which receive a light beam reflected on the data recording medium;
   a computing unit that computes the output signal adjusted by the amplitude control unit, thereby generates a push-pull signal; and
   a pre-pit detection unit that detects a pre-pit signal on basis of the push-pull signal, wherein
   the amplitude control unit adjusts amplitudes of a first output signal and a second output signal on basis of an eccentricity component of the data recording medium.

**8.** A pre-pit detection method for detecting a pre-pit formed on a data recording medium, comprising:

extracting an eccentricity component of the data recording medium;
compensating for an amplitude of an output signal output from at least one of a first light receiving region and a second light receiving region on basis of the eccentricity component of the data recording medium;
subjecting the output signal whose amplitude has been compensated to logical operation, thereby generating a push-pull signal; and
detecting the pre-pit on basis of the push-pull signal.

## FIG. 1

# FIG. 2

EP 1 548 712 A2

# FIG. 3A

116a

CURRENT
MEASUREMENT
CIRCUIT

1

115

116

ACTUATOR

111

112

113

114

117

120

# FIG. 3B

TANGENTIAL DIRECTION OF DISK
(DIRECTION ALONG WHICH GROOVES ARE FORMED)

RADIAL DIRECTION
OF DISK

| A | D |
|---|---|
| B | C |

120

## FIG. 4

RADIAL DIRECTION OF DISK

SIGNAL PROPORTIONAL TO TRAVELLING DISTANCE OF OBJECTIVE LENS

TANGENTIAL DIRECTION OF TRACKS

AMP

GAIN CONTROL CIRCUIT

AMP

GAIN CONTROL CIRCUIT

INVERTING AMPLIFIER

PHASE COMPENSATION CIRCUIT

BINARIZATION CIRCUIT

PRE-PIT DETECTION SIGNAL PPd

THRESHOLD VALUE TH

PUSH-PULL SIGNAL P

EP 1 548 712 A2

# *FIG. 5*

RADIAL PUSH-PULL
SIGNAL

LPP
COMPONENT

THRESHOLD
VALUE TH

# *FIG. 6*

GROOVE TRACK
COMPONENT

WOmax

APmin

APmax

LPP
COMPONENT

FIG. 7

ECCENTRICITY VS AR
(ECCENTRICITY SPEC., 1x: 70$\mu$m, 4x: 40$\mu$m)

EP 1 548 712 A2

# FIG. 8A

ONE ROTATION
OF DISK

AMPLITUDE

TIME

TE SIGNAL
RESIDUAL
COMPONENT

AMPLITUDE

TIME

A+D

# FIG. 8B

AMPLITUDE

TIME

B+C

AMPLITUDE

TIME

A+D

# FIG. 9A

# FIG. 9B

# FIG. 10

*FIG. 11*

PRE-PIT DETECTION SIGNAL PPd

BINARIZATION CIRCUIT — 34

THRESHOLD VALUE

BPF — 45

LEVEL DETECTION CIRCUIT — 46

33

INVERTING AMPLIFIER — 43

AMP — 31

GAIN CONTROL CIRCUIT — 41

AMP — 32

GAIN CONTROL CIRCUIT — 42

PHASE COMPENSATION CIRCUIT — 44

19

51

52

Rad — 121

Rbc — 122

TANGENTIAL DIRECTION OF TRACKS

11

Ra  Rd  Rc  Rb

A  D
B  C

120

RADIAL DIRECTION OF DISK

20

FIG. 12

# *FIG. 13*

PUSH-PULL BALANCE VS AR

# FIG. 14

EP 1 548 712 A2